# EUROPÄISCHE PATENTSCHRIFT

(11) **EP 2 146 836 B1**
(45) Veröffentlichungstag und Bekanntmachung des Hinweises auf die Patenterteilung: **05.06.2013**
(21) Anmeldenummer: 08749187.4
(22) Anmeldetag: 28.04.2008
(51) Int. Cl.: A47G 9/10, B26D 3/00, B29C 44/56, B26D 3/28

(54) **VERFAHREN ZUM HERSTELLEN EINES FORMGESCHNITTENEN GEGENSTANDES AUS SCHAUMSTOFF**
METHOD FOR PRODUCING A FORM-CUT OBJECT MADE OF FOAM
PROCÉDÉ DE FABRICATION D'UN OBJET EN MOUSSE DÉCOUPÉ

(30) Priorität: 02.05.2007 DE 102007020850; 21.07.2007 DE 102007034136
(43) Veröffentlichungstag der Anmeldung: 27.01.2010
(73) Patentinhaber: Celloflex International GmbH & Co. KG, 57258 Freudenberg (DE)
(72) Erfinder: KÖHLER, Peter, 57258 Freudenberg (DE)
(74) Vertreter: Grosse, Wolf-Dietrich Rüdiger
(86) Internationale Anmeldenummer: PCT/EP2008/003415
(87) Internationale Veröffentlichungsnummer: WO 2008/135191

(56) Entgegenhaltungen:
- DE-A1- 3 919 035
- FR-A- 2 674 183
- US-A- 3 186 271
- US-A- 3 665 792
- US-A- 4 240 240
- US-A- 5 797 154

## Beschreibung

Die Erfindung betrifft ein Verfahren zum Herstellen eines formgeschnittenen Gegenstandes aus Schaumstoff, wie beispielsweise ein Kopfkissen, eine Matratze, oder eine Formaufnahme für Fotoapparate, Messinstrumente oder andere stoßempfindliche Produkte.

Aus der DE 1758789 U ist eine Form zur Herstellung gewölbter Flächen an Gegenständen aus porösen, elastischen Stoffen wie Schaumstoff, Schaumgummi und dgl. bekannt. Die Form weist ein Druckstück aus oder besteht aus einem solchen, welches mit Ausnehmungen für die zu erstellenden Wölbungsflächen versehen ist, durch welche beim Zusammendrücken des Stoffes die nicht unter Pressdruck stehenden Teile desselben sich vorwölben und abgeschnitten werden, worauf nach dem Aufheben des Druckes die Schnittflächen die gewünschten Wölbungsflächen bilden.

Aus der DE 1891607 U ist eine Vorrichtung zum maschinellen Ausschneiden symmetrischer und unsymmetrischer räumlicher Körper aus Kunstschaumstoff-Platten und ähnlichen Werkstoffen bekannt, bei der ein umlaufendes Band-Messer oder -Säge den in eine Form gepressten Schaumstoff schneidet. Dabei wird eine das Werkstück in eine ebene Form drückende zylindrische Druckwalze, die mit einer der Walzen-Umfangs-Geschwindigkeit gleichen Geschwindigkeit in grader Richtung auf einem Arbeitstisch dicht unter der Walze hindurchtransportiert. Hinter der Walze ist ein quer zur Transportrichtung der Form umlaufendes Messer angeordnet, welches den Schaumstoff etwa in seiner Mittelebene durchschneidet, wobei eine Verstellvorrichtung sowohl für den Abstand zwischen Oberkante-Form und Unterkante-Walze, als auch für die Höhenlage des Messers vorgesehen ist.

Aus der DE 1709739 U ist eine Pressform zum Formen von Körpern aus poröser Masse wie Schaumgummi, Schwammgummi, Kunststoff-Schaum oder dgl. mit unten ausgehöhlter und oben ebener Fläche bekannt. Dabei weist die z.B. kasten- oder röhrenförmige Form unten einen Boden mit einer Öffnung auf, deren Rand die Form des größten Umfanges der Aushöhlung hat, den der zu formende Körper erhalten soll. Als Presstempel dient eine Scheibe, die parallel zum Boden in die Form passt und hineinbewegt werden kann, so dass sie das Pressgut zwischen dem Stempel und dem Boden zusammenpresst und ein Teil der Pressmasse aus der Deckelöffnung sich herauswölbt und mit einem auf der Oberfläche des Bodens geführten Messer abgeschnitten werden kann.

Aus der DE 35 22 192 A1 ist ein Verfahren zur Herstellung eines Körpers aus einem Rohling aus Schaumstoff, Hartschaum oder dgl. mittels eines Heizdraht-, Thermoschneidgeräts oder dgl. bekannt. Dabei werden mehrere gedachte Ebenen durch den Rohling gelegt. Definierte Punkte jeder Tangenten einer Ebene werden am oder außerhalb des Rohlings mit entsprechenden definierten Punkten der entsprechenden Tangente der benachbarten Ebene am oder außerhalb des Rohlings mittels biegsamer, wärmebeständiger Verbindungen verbunden und entlang dieser Verbindungen wird das Schneidelement geführt.

Die Druckschrift US 4,240,240 offenbart einen Gegenstand, hergestellt aus Schaumstoff durch Formschneiden. Der Gegenstand umfasst einen ersten Form- oder Konturschnitt und mindestens einen zweiten Formschnitt, welcher dem ersten Form- oder Konturschnitt überlagert ist und in eine größere Tiefe des Schaumstoffs reicht als der erste Schnitt.

Die Druckschrift FR-A-2 674 183 offenbart ein Verfahren zu Herstellen eines formgeschnittenen Gegenstandes aus Schaumstoff. Das Verfahren umfasst folgende Schritte: a) Herstellen einer ersten Vorversion des Gegenstands mit einem ersten Formschnitt durch Abscheiden des in eine erste Negativ-Form eingedrückten ersten Teils des Schaumstoff-Rohlings oder a') Herstellen einer ersten Vorversion des Gegenstandes durch Abschneiden eines ersten Teils des Schaumstoff-Rohlings per Konturschnitt; b) Eindrücken eines Teil der ersten Vorversion des Gegenstandes im Bereich des ersten Form- oder Konturschnitts mit Hilfe eines Druckstempels in eine zweite Negativform; und c) Herstellen des Gegenstandes mit einem Formschnitt, welcher jeweils dem ersten Form- oder Konturschnitt überlagert ist durch Abschneiden des in die zweite Negativform eingedrückten Teils der ersten Vorversion.

Bekannt ist es Konturen in Schaumstoff zu schneiden. Bekannt ist es auch, Formschnitte mit Hilfe einer Durchdrück- bzw. Formschneidemaschine in Schaumstoffe einzubringen. Hierzu wird in einem Arbeitsschritt ein Teil eines ursprünglich z.B. in Blockform vorliegenden Schaumstoff-Rohlings mittels einer Walze in eine erste Negativ-Form, auch erstes Werkzeug genannt, gedrückt. Der in die Negativ-Form gedrückte Teil des Schaumstoffs wird dann beispielsweise mittels eines oszillierenden oder rotierenden Messers abgeschnitten. Nach dem Weitertransport entspannt sich der Schaumstoff wieder und es hat sich dann im Schaumstoff mindestens ein erster Formschnitt entsprechend der ersten Negativ-Form gebildet. Die Negativ-Form kann beispielsweise aus Holz- oder Aluminium gebildet sein.

Nachteilig an dieser Vorgehensweise ist, dass sie nicht geeignet ist, auch komplexe Formschnitte, d.h. z.B. enge verwinkelte Aussparungen in größeren / unterschiedlichen Tiefen in den Schaumstoff einzubringen. Die Begrenzungen / Kanten werden dann nur ungenau zugeschnitten und die Oberflächen werden nicht glatt.

Die Druckschrift US-A-4 240 240 offenbart einen Gegenstand, hergestellt aus Schaumstoff durch Formschneiden, umfassend einen ersten Form- oder Konturschnitt, wobei mindestens ein zweiter Formschnitt, welcher dem ersten Form- oder Konturschnitt überlagert ist, in größere Tiefen des Schaumstoffs reicht als der erste Schnitt.

Schließlich ist aus der französischen Patentanmeldung FR 2 674 183 ein Verfahren zum Herstellen eines formgeschnittenen Gegenstandes aus Schaumstoff bekannt, welches folgende Schritte umfasst:
a) Herstellen einer ersten Vorversion des Gegenstandes mit einem ersten Formschnitt durch Abschneiden des in die erste Negativ-Form eingedrückten ersten Teils eines Schaumstoff-Rohlings; oder
a') Herstellen einer ersten Vorversion des Gegenstandes durch Abschneiden eines ersten Teils des Schaumstoff-Rohlings per Konturschnitt, und
b) Eindrücken eines Teils der ersten Vorversion des Gegenstands im Bereich des ersten Form- oder Konturschnitts mit Hilfe eines Druckstempels in eine zweite Negativ-Form; und
c) Herstellen des Gegenstandes mit einem Formschnitt, welcher jeweils dem ersten Form- oder Konturschnitt verlagert ist, durch Abschneiden des in die zweite Negativ-Form eingedrückten Teils der ersten Vorversion.

Ausgehend von diesem Stand der Technik liegt der Erfindung die Aufgabe zugrunde, ein bekanntes Verfahren zum Herstellen eines form- oder konturgeschnittenen Gegenstandes aus Schaumstoff dahingehend weiterzubilden, dass es auch die präzise Erstellung komplex-geformter Formschnitte in dem Schaumstoff ermöglicht.

Diese Aufgabe wird durch das in Patentanspruch 1 beanspruchte Verfahren gelöst.

Der Begriff Formschnitt meint im Rahmen der vorliegenden Erfindung auch Aussparungen oder beliebige Profilierungen oder Konturierungen in dem Schaumstoff. Eine Negativ-Form wird auch als Werkzeug bezeichnet.

Die Erfindung sieht vor, dass der Schaumstoff nach einem ersten Form- oder Konturschnitt als erstem Arbeitsschritt mindestens einem zweitem Arbeitsschritt unterworfen wird. In dem zweiten Arbeitsschritt wird ein Teil des nach dem ersten Arbeitsschritt verbliebenen Schaumstoffs mit einer Formschneidemaschine in eine Negativ-Form, d.h. ein Werkzeug, gedrückt. Wenn bei dem ersten Arbeitsschritt ebenfalls eine Formschneidemaschine verwendet wurde sind die erste und die zweite Negativ-Form vorzugsweise voneinander verschieden.

Um während des Eindrückens des Schaumstoffs im Bereich des ersten Form- oder Konturschnitts in die bei dem zweiten Arbeitsschritt verwendete Negativ-Form eine gute Druckverteilung nicht nur nach unten, sondern auch zu den Seiten hin zu erreichen, erfolgt das Eindrücken vorzugsweise mit Hilfe eines Druckstempels, welcher als Positiv-Form zumindest näherungsweise dem per Formschnitt oder per Konturschnitt abgeschnittenen ersten Teil des Schaumstoffrohlings entspricht. Auf diese Weise wird sichergestellt, dass der Schaumstoff während des zweiten Arbeitsschrittes auch in enge oder verwinkelte Bereiche der Negativ-Form hineingedrückt wird.

Der Druckstempel kann aus dem gleichen Material wie der bearbeitete Schaumstoff oder aus einem anderen Material, wie beispielsweise Holz, Aluminium oder einem Schaum höherer Dichte hergestellt sein.

Während des zweiten Arbeitsschrittes wird der Druckstempel zwischen Drückwalze und Schaumstoff gelegt und zwar vorzugsweise im Bereich des ersten Form- oder Konturschnitts mit seiner positiven Ausprägung auf den Schaumstoff. Der so in die Negativ-Form eingedrückte Teil des Schaumstoffs wird dann entlang einer Schnittlinie abgeschnitten und es entsteht dann ein Formschnitt in demselben Schaumstoff. Der während des zweiten Arbeitsschrittes hergestellte Form- oder Konturschnitt ist dem ersten Formschnitt überlagert und reicht in größere Tiefen des Schaumstoffs als der erste Schnitt.

Allgemein ermöglicht das erfindungsgemäße Verfahren durch n-fache Wiederholung der beschriebenen Arbeitsschritte vorzugsweise jeweils mit anders-geformten Werkzeugen eine Überlagerung beliebig vieler und beliebig geformter Schnitte bei ein und demselben Schaumstoffstück. Durch diese schrittweise Bearbeitung kann schließlich ein komplex-geformter Gesamtformschnitt mit scharfen Konturen / Begrenzungen / Kanten und glatten Oberflächen auch in größeren Tiefen in den Schaumstoff eingebracht werden.

Das erfindungsgemäße Verfahren ist geeignet für Schaumstoffe mit unterschiedlichen Eigenschaften in Dichte und Oberfläche, beispielsweise für viskoelastische Schaumstoffe, Polyether-Schaumstoffe oder Latex-Schäume.

Das soeben allgemein beschriebene erfindungsgemäße Verfahren wird nachfolgend unter Bezugnahme auf die beigefügten Figuren beispielhaft erläutert, wobei
- Figur 1: einen ersten Arbeitsschritt gemäß der Erfindung;
- Figur 2: die erste Vorversion des form- oder konturgeschnittenen Gegenstandes aus Schaumstoff als Ergebnis des ersten Arbeitsschrittes;
- Figur 3: einen zweiten Arbeitsschritt;
- Figur 4: den formgeschnittenen Gegenstand nach dem zweiten Arbeitsschritt; und
- Figur 5: eine Verwendung für den formgeschnittenen Gegenstand
zeigt.

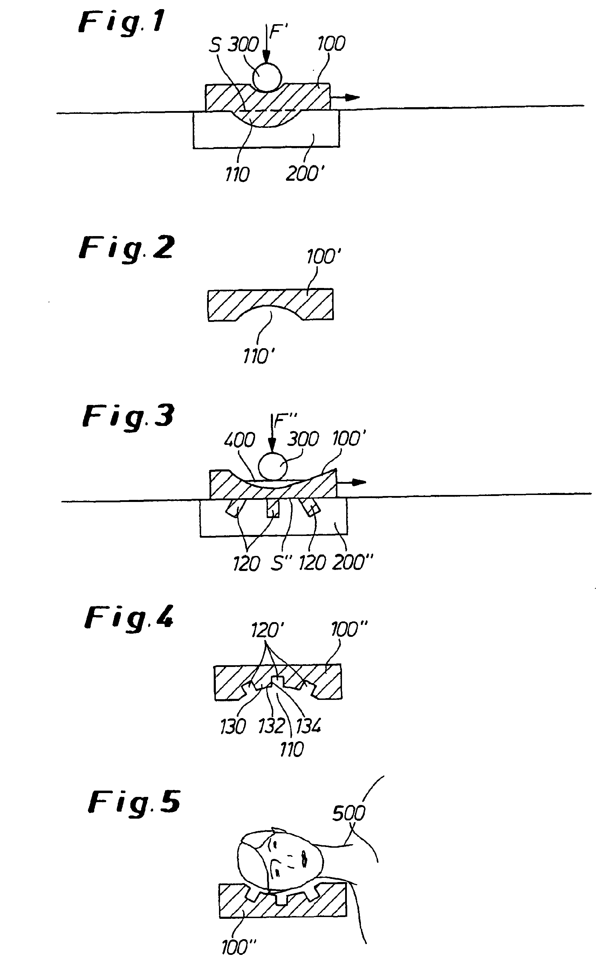

Die Figuren 1-5 zeigen die Herstellung eines Kopfkissens als Beispiel für einen formgeschnittenen Gegenstand. In allen Figuren sind gleiche technische Elemente mit gleichen Bezugszeichen bezeichnet.

Figur 1 veranschaulicht einen ersten Arbeitsschritt, bei dem ein erster Teil 110 eines ursprünglich quaderförmigen Schaumstoffrohlings 100 in eine erste Negativ-Form 200' gedrückt wird. Das Eindrücken erfolgt mit einer Kraft F' über eine Walze 300. Die Kraft F' bzw. der daraus resultierende Druck werden individuell eingestellt. Der in die Negativ-Form eingedrückte Teil 110 des Schaumstoffs wird entlang der Schnittlinie S abgeschnitten.

Nach der Entspannung ist dann in dem Schaumstoff ein erster Formschnitt in Form einer ersten Aussparung 110' ausgebildet, wie er in Figur 2 gezeigt ist. Der entspannte Schaumstoff repräsentiert dann eine erste Vorversion 100' des letzten Endes herzustellenden formgeschnittenen Gegenstandes.

Fig. 3 veranschaulicht einen zweiten Arbeitsschritt, bei dem ein (zweiter) Teil 120 des Schaumstoffes von der ersten Vorversion 110' des Gegenstandes in eine zweite Negativ-Form 200" gedrückt wird. Das Eindrücken erfolgt mit einer Kraft F". Um insbesondere im Bereich des ersten Formschnitts 110' während des Eindrückens eine gute Druckverteilung nicht nur nach unten, sondern auch zu den Seiten in die zweite Negativ-Form 200" hinein zu erreichen, erfolgt das Eindrücken vorzugsweise mit Hilfe eines Druckstempels 400, welcher als Positiv-Form zumindest näherungsweise komplementär zu dem ersten Formschnitt 110' geformt ist. Anschließend wird der in die zweite Negativ-Form eingedrückte Schaumstoff entlang der Schnittlinie S" abgeschnitten.

Mit dem zweiten Arbeitsschritt werden im Bereich des ersten Formschnitts 110 zweite Formschnitte 120' in Form von Aussparungen bzw. Einschnitten in die Kissenoberfläche eingebracht wie es in Fig. 4 gezeigt ist. Auf diese Weise entstehen neben den Einschnitten Rippen 130, die jeweils eine obere Fläche 132 und seitliche Flanken 134 aufweisen. Die Flanken können schräg oder gerade verlaufen, so dass die Rippen 130 trapez- oder rechteckig ausgebildet sind.

Figur 4 zeigt das Ergebnis des zweiten Arbeitsschrittes; im vorliegenden Fall das fertig formgeschnittene Kopfkissen, allerdings auf dem Kopf liegend. In anderen Fällen können weitere Arbeitsschritte vorgenommen werden, um weitere Formschnitte in das Kopfkissen einzubringen, welche die jeweils vorherigen Formschnitte überlagern und in immer größere Tiefen in dem Schaumstoff reichen.

Figur 5 zeigt eine Anwendung für das erfindungsgemäß formgeschnittene Kopfkissen, bei der eine Person 500 ihren Kopf auf das Kopfkissen 100" legt. Bei dem Kopfkissen bewirkt der erste Formschnitt 110' eine optimale Aufnahme für den gekrümmten Kopf der Person. Zusätzlich bewirkt der zweite Formschnitt eine verbesserte Lüftung im Bereich des Kopfes, so dass die Person bei Auflage auf dem Kopfkissen weniger schwitzen muss.

## Patentansprüche

1. Verfahren zum Herstellen eines formgeschnittenen Gegenstandes (100") aus Schaumstoff, umfassend mindestens folgende Schritte:
a) Herstellen einer ersten Vorversion (100') des Gegenstandes mit einem ersten Formschnitt durch Abschneiden des in eine erste Negativ-Form (200') eingedrückten ersten Teils (110) eines Schaumstoff-Rohlings (100); oder
a') Herstellen einer ersten Vorversion des Gegenstandes durch Abschneiden eines ersten Teils (110) des Schaumstoff-Rohlings (100) per Konturschnitt; **gekennzeichnet durch**
b) Eindrücken eines Teils (120) der ersten Vorversion (100') des Gegenstandes im Bereich des ersten Form- oder Konturschnitts mit Hilfe eines Druckstempels (300, 400) in eine zweite Negativ-Form (200"),
und
c) Herstellen des Gegenstandes (100") mit einem Formschnitt, welcher jeweils dem ersten Form- oder Konturschnitt überlagert ist, **durch** Abschneiden des in die zweite Negativ-Form eingedrückten Teils (120) der ersten Vorversion, **dadurch** gekennzeichnet, dass der Druckstempel als Positiv dem per formschnitt oder per Konturschnitt abgeschnittenen ersten Teil (110) des Schaumstoff-Rohlings entspricht.

2. Verfahren nach Anspruch 1, **dadurch gekennzeichnet, dass** als erste (200') und zweite (200") Negativ-Formen unterschiedliche Negativ-Formen verwendet werden.

3. Verfahren nach einem der vorangegangenen Ansprüche, **dadurch gekennzeichnet, dass** das Eindrücken eines Teils des Schaumstoffs in eine der Negativ-Formen jeweils mit einem Druck erfolgt, der individuell eingestellt wird, z.B. in Abhängigkeit des jeweils verwendeten Schaumstoff-Materials, oder der Tiefe der bereits zuvor in den Schaumstoff eingebrachten Form- oder Konturschnitte.

## Claims

1. A method for producing a form-cut object (100") made of foam, comprising at least the following steps:
a) producing a first preliminary version (100') of the object with a first form cut by trimming a first part (110) of a foam blank (100) that is pressed into a first negative mould (200') or
a') producing a first preliminary version of the object by trimming a first part (110) of the foam blank (100) by means of a contour cut, **characterized by**
b) pressing a part (120) of the first preliminary version (100') of the object into a second negative mould (200") in the region of the first form or contour cut with the aid of a plunger (300, 400) and
c) producing the object (100") with a form cut that is respectively superimposed on the first form or contour cut by trimming the part (120) of the first preliminary version pressed into the second negative mould,
**characterized in**
**that** the plunger in the form of a positive corresponds to the first part (110) of the foam blank trimmed by means of a form cut or by means of a contour cut.

2. The method according to Claim 1, **characterized in that** different negative moulds are used as fïrst (200') and second (200") negative moulds.

3. The method according to one of the preceding claims, **characterized in that** a part of the foam material is respectively pressed into one of the negative moulds with a pressure that is individually adjusted, e.g., in dependence on the respective foam material used or the depth of the form or contour cuts previously produced in the foam.

## Revendications

1. Procédé de fabrication d'un objet à forme découpée (100") en mousse, comprenant au moins les étapes suivantes :
a) fabrication d'une première préversion (100') de l'objet par une première découpe de forme en découpant la première partie (110) d'une ébauche en mousse (100) comprimée dans un premier moule négatif (200'),
a') fabrication d'une première préversion de l'objet par découpe d'une première partie (110) de l'ébauche de mousse (100) en découpant les contours ;
**caractérisé par**
b) la compression d'une partie (120) de la première préversion (100') de l'objet au niveau de la première découpe de forme ou de contour à l'aide d'un piston-chasse (300, 400) dans un second moule négatif (200") et
c) la fabrication de l'objet (100") par une découpe de forme qui se superpose respectivement à la première découpe de forme ou de contour par sectionnement de la partie (120) comprimée dans le second moule négatif de la première préversion,
**caractérisé en ce que**
le piston-chasse correspond en positif à la première partie (110) découpée par découpe de forme ou découpe de contour de l'ébauche en mousse.

2. Procédé selon la revendication 1, **caractérisé en ce qu'**on utilise comme premier (200') et second (200") moules négatifs différents moules négatifs.

3. Procédé selon une des revendications précédentes, **caractérisé en ce que** la compression d'une partie de la mousse dans un des moules négatifs a lieu respectivement avec une pression qui est réglée individuellement, par exemple en fonction du matériau de mousse respectivement utilisé ou de la profondeur des découpes de forme ou de contour déjà pratiquées auparavant dans la mousse.
